# EUROPÄISCHE PATENTSCHRIFT

(11) **EP 1 260 404 B1**
(45) Veröffentlichungstag und Bekanntmachung des Hinweises auf die Patenterteilung: **07.06.2006**
(21) Anmeldenummer: 02010525.0
(22) Anmeldetag: 10.05.2002
(51) Int. Cl.: B60N 2/235

(54) **Rastbeschlag für einen Fahrzeugsitz**
Locking device for a vehicle seat
Dispositif de verrouillage pour un siège de véhicule

(30) Priorität: 21.05.2001 DE 10124618
(43) Veröffentlichungstag der Anmeldung: 27.11.2002
(73) Patentinhaber: KEIPER GmbH & Co. KG, 67657 Kaiserslautern (DE)
(72) Erfinder: Hänsel, Richard, 55237 Flonheim (DE); Rüth, Andreas, 67663 Kaiserslautern (DE); Utzinger, Karl, 66919 Weselberg (DE)
(74) Vertreter: Patentanwälte Hosenthien-Held und Dr. Held

(56) Entgegenhaltungen:
- EP-A- 0 121 452
- WO-A-01/76907
- FR-A- 2 649 942
- GB-A- 2 156 901
- US-A- 3 999 247

## Beschreibung

Die Erfindung betrifft einen Rastbeschlag für einen Fahrzeugsitz, insbesondere für einen Kraftfahrzeugsitz, mit den Merkmalen des Oberbegriffs des Anspruches 1.

Bei einem bekannten Rastbeschlag dieser Art liegt der Spannexzenter an der Sperrklinke auf der von ihrer Verzahnung abgewandten Seite an und übt aufgrund einer Federbelastung ein schließendes Moment auf die Sperrklinke aus. Je nach Toleranzen ist in der Lagerstelle der Sperrklinke ein Spiel vorhanden. Übersetzt durch das Verhältnis zwischen der Länge der Rückenlehne und der Abmessung der Sperrklinke kann dieses Spiel auch im verriegelten Zustand relativ große Bewegungen der Rückenlehne zulassen, welche hinsichtlich funktionssicherem Zusammenwirken und Verschleiß der Bauteile des Rastbeschlags sowie Sitzkomfort unerwünscht sind.

Der Erfindung liegt die Aufgabe zu Grunde, einen Rastbeschlag der eingangs genannten Art zu verbessern. Diese Aufgabe wird erfindungsgemäß durch einen Rastbeschlag mit den Merkmalen des Anspruches 1 gelöst. Vorteilhafte Ausgestaltungen sind Gegenstand der Unteransprüche.

Dadurch, daß der Spannexzenter über einen schwenkbar gelagerten Nocken auf die Sperrklinke einwirkt, wobei der Nocken relativ zur Sperrklinke beweglich ist, können Nocken und Sperrklinke so gegeneinander bewegt werden, daß das Lagerspiel der Sperrklinke eliminiert oder wenigstens reduziert wird. Vorzugsweise sind hierzu die geometrischen Verhältnisse so gewählt, daß eine Kraftkomponente des auf den Nocken einwirkenden Spannexzenters die Sperrklinke und den Nocken relativ zueinander und auch die Sperrklinke relativ zu ihrer Lagerstelle verspannt. Eine kontrollierte, beschränkte Relativbewegung kann vorzugsweise durch eine Schlitz-Zapfen-Führung erreicht werden. Die gewünschten geometrischen Verhältnisse werden vorzugsweise durch eine geeignete Anordnung einer Spannkurve erreicht, auf welche der Nocken einwirkt. Die Spannkurve ist vorzugsweise exzentrisch zur Lagerstelle der Sperrklinke mit einem in Richtung der Drehachse der Beschlagteile gelegenen Krümmungsmittelpunkt gekrümmt, so daß sie sowohl für ein schließendes Moment auf die Sperrklinke als auch für eine spielreduzierende Kraftkomponente sorgt.

Der erfindungsgemäße Rastbeschlag kann bei allen Fahrzeugsitzen eingesetzt werden, deren Rückenlehne eine Neigungseinstellfunktion, Umklappfunktion, Freischwenkfunktion oder Kombinationen davon aufweisen. Er kann auch für andere schwenkbare Bauteile eines Fahrzeugsitzes eingesetzt werden.

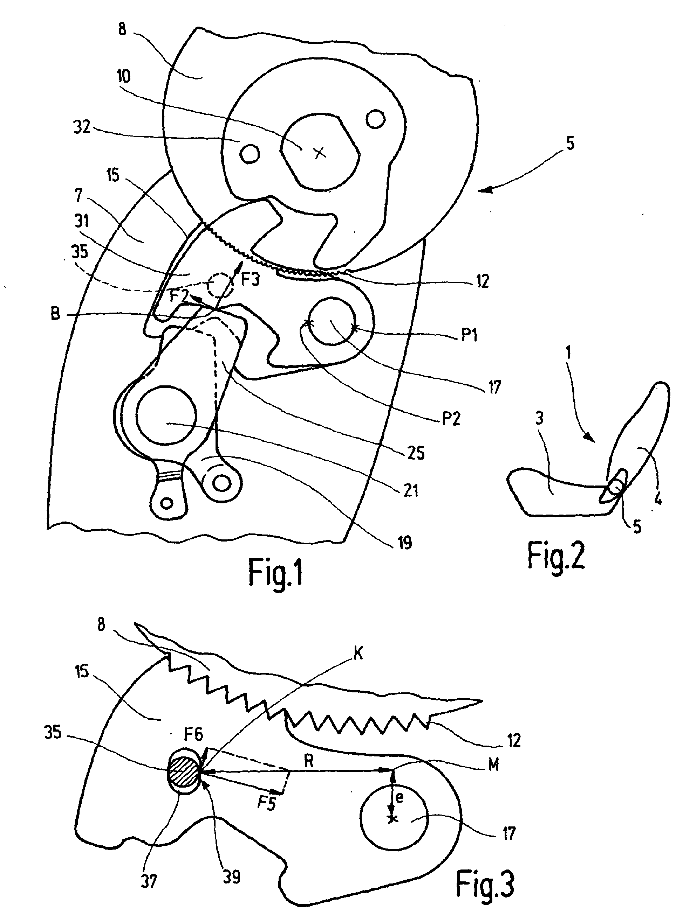

Im folgenden ist die Erfindung anhand eines in der Zeichnung dargestellten Ausführungsbeispiels näher erläutert. Es zeigen
- Fig. 1: eine Teilansicht des Ausführungsbeispiels,
- Fig. 2: eine schematische Seitenansicht eines Fahrzeugsitzes, und
- Fig. 3: einen Vertikalschnitt durch das Ausführungsbeispiel im Bereich der Sperrklinke.

Ein Fahrzeugsitz 1 für ein Kraftfahrzeug ist mit einem Sitzteil 3 und einer Rückenlehne 4 versehen, welche mittels je eines Rastbeschlags 5 auf beiden Seiten des Fahrzeugsitzes 1 schwenkbar mit dem Sitzteil 3 verbunden ist. Jeder Rastbeschlag 5 weist als erstes Beschlagteil ein sitzteilfestes Beschlagunterteil 7 und als zweites Beschlagteil ein lehnenfestes Beschlagoberteil 8 auf, welches um einen eine Drehachse definierenden Lehnenbolzen 10 relativ zum Beschlagunterteil 7 verdrehbar ist.

In einem Bereich, welcher in einer aufrechten Stellung der Rückenlehne 4 unterhalb des Lehnenbolzens 10 angeordnet ist, weist das Beschlagoberteil 8 über einen gewissen Winkelbereich hinweg als Außenverzahnung einen gekrümmten Zahnkranz 12 auf, dessen Mittelpunkt mit dem Lehnenbolzen 10 zusammenfällt. In einer verriegelten Stellung des Rastbeschlags 5 greift eine Sperrklinke 15, welche auf einem Klinkenbolzen 17 des Beschlagunterteils 7 schwenkbar gelagert ist, in den Zahnkranz 12 ein und verriegelt so den Rastbeschlag 5. Die federbelastete Sperrklinke 15 wird im Crashfall in an sich bekannter Weise durch ein Fangstück 19 gesichert, welches federbelastet auf einem Exzenterbolzen 21 des Beschlagunterteils 7 auf der vom Zahnkranz 12 abgewandten Seite schwenkbar gelagert ist und in unmittelbarer Nähe einer Fangfläche der Sperrklinke 15 angeordnet ist.

Auf dem Exzenterbolzen 21 ist ferner ein Spannexzenter 25 gelagert, welcher federbelastet mit seinem exzentrisch zum Exzenterbolzen 21 gekrümmten Ende an einer Spannfläche eines Steuernockens 31 anliegt. Der auf dem Klinkenbolzen 17 schwenkbar gelagerte Steuernocken 31 wirkt zum einen mit einer beschlagoberteilfesten Steuerscheibe 32 zusammen, welche um den Lehnenbolzen 10 herum angeordnet ist. Zum anderen wirkt der Steuernocken 31 über eine ausgeprägte Nase 35, welche in der Art einer Schlitz-Zapfen-Führung in ein Langloch 37 der Sperrklinke 15 greift, auf eine Spannkurve 39 ein, welche durch einen Teil der Berandung des Langlochs 37 gebildet wird. Der Eingriff der Sperrklinke 15 in den Zahnkranz 12 wird durch die so vom Steuernocken 31 übertragene Kraft gesichert. Zugleich werden durch eine Relativbewegung zwischen Steuernocken 31 und Sperrklinke 15 diese beiden Bauteil in der Lagerstelle, d.h. dem Klinkenbolzen 17, so verspannt, daß das Lagerspiel eliminiert oder wenigstens reduziert wird.

Im folgenden werden die für die Reduktion des Lagerspiels verantwortlichen Kräfte und Momente beschrieben. Die am Spannexzenter 25 an seinem unteren Ende angreifende Federkraft wird aufgrund der geringen Exzentrizität in eine entsprechend große Kraft im Berührpunkt B zwischen Spannexzenter 25 und Steuernocken 31 übersetzt. Diese Kraft weist eine bezüglich des Lehnenbolzens 10 tangentiale Komponente F2 und eine bezüglich des Lehnenbolzen 10 radiale Komponente F3 auf. Die radiale Komponente F3 wirkt mit einem Hebelarm, welcher dem Abstand zum Klinkenbolzen 17 entspricht, als Moment auf den Steuernocken 31 und erzeugt in der Kontaktstelle K zwischen der Nase 35 und der Spannkurve 39 eine Kraft.

Die Spannkurve 39 weist einen Radius R und eine Exzentrizität e, d.h. einen Abstand e des Krümmungsmittelpunktes M zum Klinkenbolzen 17, auf. Der Krümmungsmittelpunkt M liegt dabei näherungsweise auf der Verbindungslinie zwischen Klinkenbolzen 17 und Lehnenbolzen 10. Die in der Kontaktstelle K wirkende, auf den Krümmungsmittelpunkt der Spannkurve 39 gerichtete Kraft läßt sich zerlegen in eine bezüglich des Klinkenbolzens 17 radiale Komponente F5 und eine bezüglich des Klinkenbolzens 17 azimuthale Komponente F6. Die azimuthale Komponente F6 übt ein schließendes Moment auf die Sperrklinke 15 aus. Mit der radialen Komponente F5 und einem Hebelarm, welcher durch den Abstand der Kontaktstelle K zum Lehnenbolzen 10 definiert ist, wird ein Moment aufgebaut, welches ein am Beschlagoberteil 8 angreifendes Moment kompensieren kann, d.h. für eine Reduktion des Lagerspiels am Klinkenbolzen 17 sorgt. Der Steuernocken 31 liegt aufgrund dieser radialen Komponente F5 im langlochfernen Punkt P1 am Klinkenbolzen 17 an, während die hierzu verspannte Sperrklinke 15 im langlochnahen Punkt P2 am Klinkenbolzen 17 anliegt.

Zum Entriegeln des Rastbeschlags 5 wird beispielsweise über einen Seilzug das Fangstück 19 so geschwenkt, daß es sich von der Sperrklinke 15 löst, zunächst den Spannexzenter 25 mitnimmt, welcher sich vom Steuernocken 31 löst, und dann auch noch die Sperrklinke 15 mitnimmt, welche dann außer Eingriff von dem Zahnkranz 12 kommt. Das Beschlagoberteil 8, und damit die Rückenlehne 4, kann nun relativ zum Beschlagunterteil 7, und damit relativ zum Sitzteil 3, in die gewünschte Stellung geschwenkt werden. Beim Loslassen des Fangstücks 19 sorgen die verschiedenen Federbelastungen für eine Rückkehr in den verriegelten Zustand.

### Bezugszeichenliste

- 1: Fahrzeugsitz
- 3: Sitzteil
- 4: Rückenlehne
- 5: Rastbeschlag
- 7: Beschlagunterteil, erstes Beschlagteil
- 8: Beschlagoberteil, zweites Beschlagteil
- 10: Lehnenbolzen, Drehachse
- 12: Zahnkranz
- 15: Sperrklinke
- 17: klinkenbolzen
- 19: Fangstück
- 21: exzenterbolzen
- 25: Spannexzenter
- 31: Steuernocken
- 32: Steuerscheibe
- 35: Nase
- 37: Langloch
- 39: Spannkurve
- B: Berührpunkt zwischen Spannexzenter und Steuernocken
- e: Exzentrizität der Spannkurve
- F2: azimuthale Komponente der Kraft am Berührpunkt
- F3: radiale Komponente der Kraft am Berührpunkt
- F5: radiale Komponente der Kraft an der Kontaktstelle
- F6: azimuthale Komponente der Kraft an der Kontaktstelle
- K: Kontaktstelle zwischen Nase und Spannkurve
- M: Krümmungsmittelpunkt
- P1: Anlagepunkt des Steuernockens an den Klinkenbolzen
- P2: Anlagepunkt der Sperrklinke an den Klinkenbolzen
- R: Radius der Spannkurve

## Patentansprüche

1. Rastbeschlag für einen Fahrzeugsitz, insbesondere für einen Kraftfahrzeugsitz, mit einem ersten Beschlagteil (7), einem relativ zum ersten Beschlagteil (7) um eine Drehachse (10) verdrehbaren zweiten Beschlagteil (8), einer am ersten Beschlagteil (7) schwenkbar gelagerten Sperrklinke (15) zum Verriegeln des zweiten Beschlagteils (8) und einem schwenkbar gelagerten Spannexzenter (25) zum Sichern der Sperrklinke (15) in einem verriegelten Zustand, **dadurch gekennzeichnet, daß** der Spannexzenter (25) über einen schwenkbar gelagerten Nocken (31) auf die Sperrklinke (15) einwirkt, wobei der Nocken (31) relativ zur Sperrklinke (15) beweglich ist.

2. Rastbeschlag nach Anspruch 1, **dadurch gekennzeichnet, daß** der Nocken (31) mittels einer Schlitz-Zapfen-Führung (35, 37) relativ zur Sperrklinke (15) beschränkt beweglich ist.

3. Rastbeschlag nach Anspruch 1 oder 2, **dadurch gekennzeichnet, daß** der Nokken (31) über eine Spannkurve (39) auf die Sperrklinke (15) einwirkt.

4. Rastbeschlag nach Anspruch 3, **dadurch gekennzeichnet, daß** die Spannkurve (39) als Berandung eines Langlochs (37) der Sperrklinke (15) vorgesehen ist.

5. Rastbeschlag nach Anspruch 3 oder 4, **dadurch gekennzeichnet, daß** die Spannkurve (39) exzentrisch zur Lagerstelle (17) der Sperrklinke (15) gekrümmt ist.

6. Rastbeschlag nach Anspruch 5, **dadurch gekennzeichnet, daß** der Krümmungsmittelpunkt (M) der Spannkurve (39) wenigstens näherungsweise zwischen der Lagerstelle (17) der Sperrklinke (15) und der Drehachse (10) der Beschlagteile (7, 8) angeordnet ist.

7. Rastbeschlag nach Anspruch 5 oder 6, **dadurch gekennzeichnet, daß** auch der Nocken (31) an der Lagerstelle (17) der Sperrklinke (15) gelagert ist, wobei die Einwirkung des Spannexzenters (25) über die Spannkurve (39) eine Kraftkomponente (F5) aufbaut, welche den Nocken (31) und die Sperrklinke (15) relativ zueinander verspannt.

8. Rastbeschlag nach Anspruch 7, **dadurch gekennzeichnet, daß** der Nocken (31) und die Sperrklinke (15) an verschiedenen Punkten (P1, P2) an ihrer bolzenförmig ausgebildeten Lagerstelle (17) anliegen.

9. Rastbeschlag nach einem der Ansprüche 1 bis 8, **dadurch gekennzeichnet, daß** der Nocken (31) mit einem Steuerelement (32) des zweiten Beschlagteils (8) zusammenwirkt.

10. Fahrzeugsitz (1) mit einer schwenkbaren Rückenlehne (4), **gekennzeichnet durch** eine Rastbeschlag (7) nach einem der Ansprüche 1 bis 9.

## Claims

1. Locking device for a vehicle seat, particularly a motor vehicle seat, having a first fitting part (7), a second fitting part (8) which can rotate relative to the first fitting part (7) about an axis of rotation (10), a detent pawl (15), pivotably mounted on the first fitting part (7), for locking the second fitting part (8), and a clamping element (25), pivotably mounted, for securing the detent pawl (15) in a locked position, **characterized in that** the clamping element (25) acts on the detent pawl (15) through a pivotably mounted cam (31), the cam (31) being movable relative to the detent pawl (15).

2. Locking device according to claim 1, **characterized in that** the cam (31) is movable, to a limited extent, relative to the detent pawl (15) by means of a slot and pin guidance (35, 37).

3. Locking device according to claim 1 or 2, **characterized in that** the cam (31) acts on the detent pawl (15) through a clamping curve (39).

4. Locking device according to claim 3, **characterized in that** the clamping curve (39) is intended to be the edging of an elongated hole (37) in the detent pawl (15).

5. Locking device according to claims 3 or 4, **characterized in that** the clamping element (39) is bent eccentrically with respect to the pawl bolt (17) of the detent pawl (15).

6. Locking device according to claim 5, **characterized in that** the center (M) of the clamping element (39), at least approximately, is arranged between the pawl bolt (17), the detent pawl (15), and the axis of rotation (10) of the fitting parts (7, 8).

7. Locking device according to claims 5 or 6, **characterized in that** the cam (31) is also mounted on the bearing (17) of the detent pawl (15), with the action of the clamping element (25), building up a force component (F5) through the clamping curve (39), which clamps the cam (31) and the detent pawl (15) relative to one other.

8. Locking device according to claim 7, **characterized in that** the cam (31) and the detent pawl (15), in the different Points (P1, P2), bear against their bolt-shaped bearing (17).

9. Locking device according to one of the claims 1 to 8, **characterized in that** the cam (31) interacts with a control element (32) of the second fitting part (8).

10. Vehicle seat (1) with a pivotable backrest (4), **characterized by** a locking device (7) according to one of the claims 1 to 9.

## Revendications

1. Armature à verrouillage pour un siège de véhicule, en particulier pour un siège de véhicule automobile, avec une première partie d'armature (7), une deuxième partie d'armature (8) apte à pivoter par rapport à la première partie d'armature (7) autour d'un axe de rotation (10), un cliquet d'arrêt (15) monté apte à pivoter sur la première d'armature (7) en vue du verrouillage de la deuxième partie d'armature (8) et un excentrique de serrage (25) monté apte à pivoter en vue du blocage du cliquet d'arrêt (15) dans un état verrouillé, **caractérisée par le fait que** l'excentrique de serrage (25) agit sur le cliquet d'arrêt (15) par l'intermédiaire d'une came (31) montée apte à pivoter, à l'occasion de quoi la came (31) est mobile par rapport au cliquet d'arrêt (15).

2. Armature à verrouillage selon la revendication (1), **caractérisée par le fait que** la came (31) est mobile de façon limitée par rapport au cliquet d'arrêt (15) au moyen d'un guide à fente et tourillon (35, 37).

3. Armature à verrouillage selon l'une des revendications 1 ou 2, **caractérisée par le fait que** la came (31) agit sur le cliquet d'arrêt (15) par l'intermédiaire d'une courbe de serrage (39).

4. Armature à verrouillage selon la revendication 3, **caractérisée par le fait que** la courbe de serrage (39) est prévue comme bordure d'un trou oblong (37) du cliquet d'arrêt (15).

5. Armature à verrouillage selon l'une des revendications 3 ou 4 , **caractérisée par le fait que** la courbe de serrage (39) est courbée excentriquement à la position de montage (17) du cliquet d'arrêt (15).

6. Armature à verrouillage selon la revendication 5, **caractérisée par le fait que** le point central de courbure (M) de la courbe de serrage (39) est disposé au moins de manière approximative entre la position de montage (17) du cliquet d'arrêt (15) et l'axe de rotation (10) des parties d'armature (7, 8).

7. Armature à verrouillage selon l'une des revendications 5 ou 6, **caractérisée par le fait qu'**également la came (31) est montée sur la position de montage (17) du cliquet d'arrêt (15), à l'occasion de quoi l'action de l'excentrique de serrage (25) sur la courbe de serrage (39) forme une composante de force (F5), laquelle serre la came (31) et le cliquet d'arrêt (15) l'un par rapport à l'autre.

8. Armature à verrouillage selon la revendication 7 , **caractérisée par le fait que** la came (31) et le cliquet d'arrêt (15) sont situés sur différents points (P1, P2) sur leur position de montage (17) réalisée sous la forme d'un axe.

9. Armature à verrouillage selon l'une des revendications 1 à 8 , **caractérisée par le fait que** la came (31) coopère avec un élément de commande (32) de la deuxième partie d'armature (8).

10. Siège de véhicule (1) avec un dossier pivotant (4), **caractérisé par** une armature à verrouillage (7) telle que définie à l'une des revendications 1 à 9.
